# EUROPÄISCHE PATENTSCHRIFT

(11) **EP 0 557 579 B1**
(45) Veröffentlichungstag und Bekanntmachung des Hinweises auf die Patenterteilung: **13.12.1995**
(21) Anmeldenummer: 92117666.5
(22) Anmeldetag: 16.10.1992
(51) Int. Cl.: F16J 15/32

(54) **Dichtungsanordnung**
Sealing arrangement
Dispositif d'étanchéité

(30) Priorität: 26.02.1992 DE 4205862
(43) Veröffentlichungstag der Anmeldung: 01.09.1993
(73) Patentinhaber: Firma Carl Freudenberg, 69469 Weinheim (DE)
(72) Erfinder: Forch, Hans, W-6943 Birkenau (DE); Grafmüller, Martin, W-6943 Birkenau (DE)

(56) Entgegenhaltungen:
- EP-A- 0 032 988
- EP-A- 0 033 964
- EP-A- 0 378 740
- DE-B- 3 019 736
- DE-C- 854 448

## Beschreibung

Die Erfindung betrifft eine Dichtungsanordnung zur Abdichtung einer hin- und herbewegbaren Stange gegenüber einem die Stange in radialem Abstand umschließenden Gehäuse, wobei die Dichtungsanordnung einen Dichtring aus polymerem Werkstoff enthält, der mit einer radial beweglichen Dichtlippe versehen und in einem Dichtungsgehäuse aufgenommen ist, wobei eine Hilfsdichtlippe vorgesehen ist, mit der das Gehäuse durch die Kraft einer in axialer Richtung wirksamen Druckfeder in Eingriff bringbar ist und wobei der Dichtring durch einen Führüngsring auf der Stange abgestützt ist und die Hilfsdichtlippe einen einstückigen Bestandteil des Dichtringes bildet.

Eine solche Dichtungsanordnung ist aus der EP-A- 0 032 988 bekannt. Die vorbekannte Dichtungsanordnung ist zur Abdichtung einer Kolbenstange von Teleskop-Schwingungsdämpfern vorgesehen, wobei die Kolbenstange gegenüber dem Dämpfergehäuse axial verschieblich und radial beweglich ist. Die Dichtungsanordnung ist mit einer Manschette versehen, die eine Dichtlippe aufweist, wobei die Manschette von einem spielfrei auf der Kolbenstange geführten Stützring in radialen Bewegungen der Kolbenstange nachgeführt wird. Der Stützring besteht aus einem Gleitlagerwerkstoff um die Funktion der Dichtung auch bei besonders tiefen Temperaturen zu gewährleisten.

Eine weitere Dichtungsanordnung ist aus der DE-AS 30 19 736 bekannt. Die darin gezeigte Kolbenstangendichtung weist ein in radialer Richtung fest eingebautes, die Kolbenstange umschließendes äußeres Dichtelement auf und ein inneres Dichtelement, das die Kolbenstange ebenfalls mit Vorspannung umschließt und schwimmend gelagert ist, so daß es Radialbewegungen der abzudichtenden Kolbenstange zu folgen vermag. Eine in axiale Richtung wirksame Druckfeder beaufschlagt das innere Dichtelement axial in Richtung des äußeren Dichtelements so daß dadurch eine dichte Verbindung gebildet ist. Das innere Dichtelement bildet die axiale Abstützung der Druckfeder. Dabei ist allerdings zu beachten, daß die vorbekannte Dichtungsvorrichtung zum Abdichten von druckbeaufschlagten Medien aufgrund des dann auftretenden, hohen Verschleißes wenig geeignet ist. Außerdem ist die Dichtung aus zwei separat zu erzeugenden Dichtringen gebildet, wodurch sich eine wenig befriedigende Herstellbarkeit der Dichtungsanordnung und eine schwierige Montage ergeben.

Der Erfindung liegt die Aufgabe zugrunde, eine Dichtungsanordnung der vorbekannten Art derart weiterzuentwickeln, daß eine reibungsarme Verschiebbarkeit der Dichtung in radialer Richtung bei der Abdichtung druckbeaufschlagter Medien gewährleistet ist, daß komfortbeeinträchtigende Anschlaggeräusche die durch ein Anschlagen des Führungsrings am Gehäuse verursacht werden, vermiden werden und daß die Dichtungsanordnung einfach herstellbar und montierbar ist.

Diese Aufgabe wird erfindungsgemäß mit den kennzeichnenden Merkmalen von Anspruch 1 gelöst. Auf vorteilhafte Ausgestaltungen nehmen die Unteransprüche Bezug.

Zur Lösung der Aufgabe ist es vorgesehen, daß dem Dichtring eine einstückig angeformter Anschlagpuffer zur Begrenzung von radialen Auslenkbewergungen in Richtung des Dichtungsgehäuses zugeordnet ist und daß der Anschlagpuffer einen radialen Abstand vom Dichtungsgehäuse aufweist, der 0,2 bis 0,8 mal so groß ist wie ein radialer Spalt, den der Führungsring mit einem Gehäusevorsprung begrenzt. Durch die Abstützung des Dichtringes auf dem Führungsring ist der Verschleiß der Dichtlippen deutlich reduziert und die Dichtungsanordnung weist gute Gebrauchseigenschaften während einer langen Gebrauchsdauer auf. Ein wechseln der Dichtungsanordnung ist durch die einstückige Ausbildung des Dichtringes, an dem sowohl die Dichtlippe als auch die Hilfsdichtlippe einstückig angeformt ist, wesentlich vereinfacht. Außerdem ist die Gefahr von montagebedingten Beschädigungen durch die einfache Ausgestaltung der Dichtungsanordnung wesentlich reduziert. Einer besonders genauen Zuordnung der von der Dichtungsanordnung umfaßten Teile zueinander ist nicht nötig. Im Rahmen der vorliegenden Erfindung ist es vorgesehen, daß der Führungsring auf der von dem abzudichtenden Medium abgewandten Seite des Dichtringes angeordnet und an eine Anschlagfläche des Gehäuses angelegt ist. Die vom Mediendruck auf die Dichtung ausgeübte Axialkraft wird dadurch im wesentlichen von dem aus einem gleitfähigen Kunststoff bestehenden Stützring aufgenommen.

Die mechanischen Belastungen auf den Dichtring aus elastomeren Werkstoff sind dadurch reduziert. Weniger Verschleiß, bessere Gebrauchseigenschaften und eine längere Gebrauchsdauer werden dadurch bedingt, sowie eine außerordentlich reibungsarme Verschiebbarkeit der Dichtung in radialer Richtung. Eine hohe Druckbeaufschlagung des abzudichtenden Mediums hat im wesentlichen keinen Einfluß auf die guten Gebrauchseigenschaften.

Das frühere Anschlagen des Anschlagpuffers am Dichtungsgehäuse bezogen auf das Anschlagen des Führungsringes am Gehäusevorsprung hat den Vorteil, daß extreme Auslenkbewegungen der Stange mit dem abdichtenden Dichtring bei Berührung des Anschlagpuffers an dem Dichtungsgehäuse allmählich und federnd abgefangen werden.

Die progressive Dämpfungscharakteristik des Anschlagpuffers verhindert komfortbeeinträchtigende Anschlaggeräusche. Nur in Extremfällen, die im normalen Betrieb so gut wie auszuschließen sind, erfolgt eine Anschlagberührung des Führungsringes an dem Gehäusevorsprung.

Gemäß einer vorteilhaften Ausgestaltung ist es vorgesehen, daß der Führungsring aus einem gleitfähigen Kunststoff, bevorzugt aus PTFE bestehen kann und in den Dichtring einknöpfbar ist. Der Stützring bildet demnach kein separat zu montierendes oder in der Gehäusebohrung festzulegendes Baute, sondern er kann bereits vor der eigentlichen Montage in den Dichtring eingeknöpft werden und gemeinsam mit diesem montiert werden. Der Führungsring kann beispielsweise formschlüssig in den Dichtring eingeknöpft sein.

Zusätzlich oder alternativ besteht die Möglichkeit, daß der Dichtring und der Führungsring adhäsiv verbunden sind. Unabhängig von den radialen Auslenkungen des Dichtringes wird dieser durch den Führungsring gestützt. Der Führungsring, der bevorzugt aus PTFE besteht, kann zur Verlängerung seiner Gebrauchsdauer verstärkt sein. Dies bietet sich insbesondere dann an, wenn der Führungsring eingeknöpft in dem Dichtring gehalten wird und bei einem Austausch des Dichtringes wieder verwendet werden soll.

Hinsichtlich einer guten Abdichtung des abzudichtenden Mediums ist es vorgesehen, daß die Dichtlippe und die Hilfsdichtlippe durch konvergierende Dichtflächen gebildet sind, die auf der dem abzudichtenden Medium zugewandten Seite einen größeren Winkel mit den abzudichtenden Flächen einschließen, als auf der dem Medium abgewandten Seite.

Diese Ausgestaltung der Dichtlippen ist insbesondere bei der dynamisch abdichtenden Dichtlippe von Vorteil. In Abhängigkeit von den jeweiligen Gegebenheiten des Anwendungsfalles ergibt sich bei axialer Bewegung der abzudichtenden Stange in die eine Richtung eine größere Abstreifwirkung als in die andere. Dadurch wird bewirkt, daß insbesondere in Verbindung mit auftretenden Radialauslenkungen der abzudichtenden Stange Bestandteile des abzudichtenden Mediums, die die dynamische Dichtlippe bereits passiert haben bei Umkehr der Bewegungsrichtung der abzudichtenden Stange wieder in Richtung des abzudichtenden Raumes mitgenommen werden.

Der Dichtlippe kann eine Ringwendelfeder zugeordnet sein, so daß ein gutes Abdichtungsergebnis der abzudichtenden, axial beweglichen Stange sowohl bei niedriger Druckbeaufschlagung als auch bei hoher Druckbeaufschlagung sichergestellt ist.

Zur Stabilisierung des Dichtringes ist ein Versteifungsring vorgesehen, der zumindest teilweise von Dichtring-Werkstoff umschlossen ist, wobei die Druckfeder nur den Versteifungsring anliegend berührt. Nach dieser Ausgestaltung ist die Druckfeder einerseits im Dichtungsgehäuse, das bevorzugt aus metallischem Werkstoff besteht, abgestützt und andererseits an dem ebenfalls zumeist aus metallischem Werkstoff bestehenden Versteifungsring. Bei Relativbewegungen zwischen dem Dichtring und der Druckfeder oder der Druckfeder und dem Dichtungsgehäuse ist dadurch Verschleiß und/oder eine Beschädigung der einander berührenden Teile ausgeschlossen. Die einander berührenden Flächen können beispielsweise mit einer reibungsverringernden Oberflächenbeschichtung versehen sein, wodurch die mechanischen Belastungen insbesondere auf die dynamisch abdichtende Dichtlippe bei Radialauslenkungen der abzudichtenden Stange reduziert sind. Der Dichtring vermag Auslenkbewegungen der Stange dann in besonders guter Weise zu folgen und die guten Gebrauchseigenschaften bleiben während einer besonders langen Gebrauchsdauer nahezu unverändert erhalten.

Die Druckfeder kann beispielsweise durch eine Tellerfeder gebildet sein. Die Ausdehnung der Dichtungsanordnung in axialer Richtung ist in diesem Falle besonders gering und
bei entsprechender Anordnung der Tellerfeder in axialer Richtung zwischen dem Versteifungsring und dem Dichtungsgehäuse können die sich mit veränderlichem Federweg veränderbaren Federkräfte der Tellerfeder in axialer Richtung vorteilhaft genutzt werden. Nach einer anderen Ausgestaltung kann die Druckfeder beispielsweise auch als Schraubendruckfeder ausgebildet sein, wobei diese auf der der Dichtung zugewandten Seite durch einen Vorsprung aus elastomerem Werkstoff geführt sein kann, der einstückig an den Dichtring angeformt ist.

Die axiale Vorspannkraft der Druckfeder ist so zu bemessen, daß diese größer ist, als die axiale Reibkraft auf die Dichtlippe des Dichtringes bei axialer Verschiebung der abzudichtenden Stange. Ein ausreichend großer Anpreßdruck der Hilfsdichtlippe an die abzudichtende Fläche des Gehäuses ist dadurch jederzeit gewährleistet.

Die Dichtungsanordnung der vorliegenden Erfindung wird nachfolgend anhand der in der Anlage beigefügten Zeichnungen weiter beschrieben. Es zeigen:
Figur 1 eine Dichtungsanordnung, bei der die Druckfeder als Tellerfeder ausgebildet ist,
Figur 2 eine Dichtungsanordnung, ähnlich wie die Dichtungsanordnung aus Figur 1, wobei die Druckfeder durch eine Schraubendruckfeder gebildet wird.

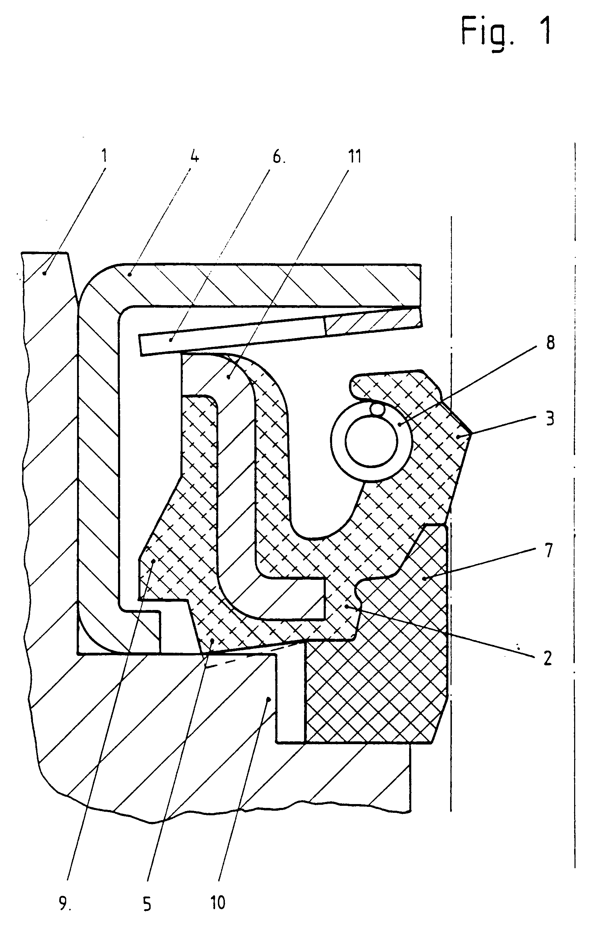

In Figur 1 ist ein Ausführungsbeispiel der erfindungsgemäßen Dichtungsanordnung in geschnittener Darstellung gezeigt, die zum Abdichten von mit bis zu 120 bar druckbeaufschlagtem Medium geeignet ist, wobei das Dichtungsgehäuse 4 den Dichtring 2, die Druckfeder 6, die in diesem Falle als Tellerfeder ausgebildet ist, und den Führungsring 7 aufnimmt und in eine Bohrung des Gehäuses 1 eingesetzt ist. Das Dichtungsgehäuse 4 weist ein im wesentlichen U-förmiges, in Richtung der hier nicht dargestellten Stange geöffnetes Profil auf und umschließt den Dichtring 2 mit radialem Abstand. Zur Erleichterung der Montage umschließt das Dichtungsgehäuse 4 den Dichtring 2 derart, daß der Anschlagpuffer 9, der sich im wesentlichen in radialer Richtung erstreckt und einstückig mit dem Dichtring 2 ausgebildet ist, vor der Montage in axialer Richtung an dem benachbarten, radial nach innen weisenden Schenkel des U-förmigen Profils anliegt. Nach der Montage der Dichtungsanordnung in das Gehäuse, die durch axiales Einschieben in die Bohrung des Gehäuses 1 erfolgt, ist das Dichtungsgehäuse 4 in axialer Richtung an einem Gehäusevorsprung zur Anlage gebracht. Der Anschlagpuffer 9 weist dann einen axialen Abstand vom Dichtungsgehäuse 4 auf, so daß der Dichtring 2 in axialer Richtung nur noch im Bereich der quasi statisch belasteten Hilfsdichtlippe 5 am Gehäuse 1 dichtend anliegt. Der Führungsring 7 ist in dem hier dargestellten Ausführungsbeispiel in den Dichtring eingeknöpft und mit diesem adhäsiv verbunden. Durch die Abstützung der Tellerfeder einerseits im Dichtungsgehäuse 4 und andererseits an der Begrenzungskante des Versteifungsringes 11, ist die Federkraftbeaufschlagung der Hilfsdichtlippe 5 bei radialen Auslenkbewegungen des Dichtringes 2 veränderlich. Eine ähnlich ausgestaltete Dichtungsanordnung könnte auch als Kassettendichtung ausgebildet sein. Die Hilfsdichtlippe 5 würde sich in diesem Falle an einem radial nach innen gerichteten Schenkel des Dichtungsgehäuses abstützen. Hierbei wäre allerdings von Nachteil, daß das Dichtungsgehäuse 4 gegenüber dem Gehäuse 1 zusätzlich abgedichtet werden müßte, was einen vergrößerten Herstellungsaufwand bedingt.

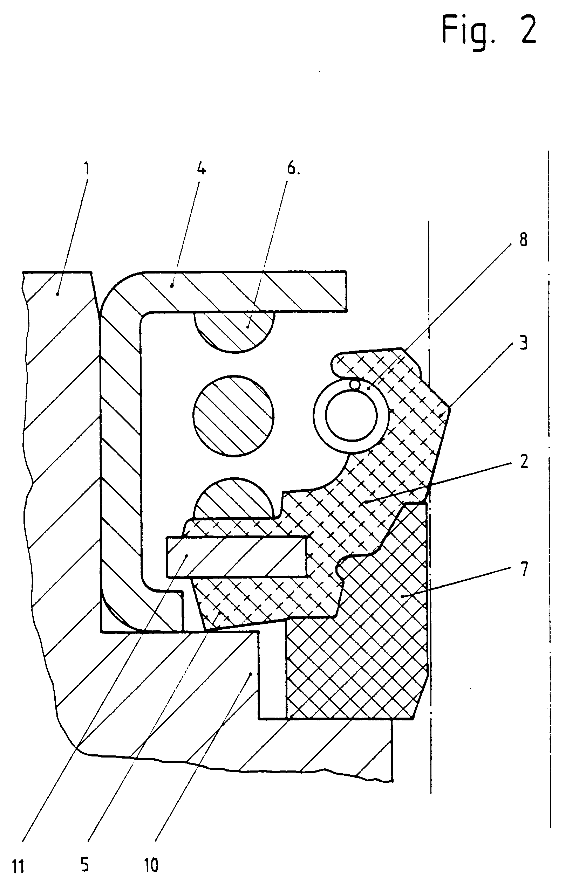

Die Dichtungsanordnung aus Figur 2 ist der Dichtungsanordnung aus Figur 1 sehr ähnlich. Anstelle einer Tellerfeder gelangt als Druckfeder 6 eine Schraubenfeder zur Anwendung, die in axialer Richtung einerseits am Dichtungsgehäuse 4 und andererseits an einem sich in radialer Richtung erstreckenden Versteifungsring 11 angeordnet ist. Auch in diesem Ausführungsbeispiel berührt die Hilfsdichtlippe 5 das Gehäuse 1 dichtend anliegend. Bei radialen Verlagerungen der hier nicht dargestellten Stange verlagern sich sowohl der Dichtring 2 als auch der Führungsring 7, die aneinander festgelegt sind, in gleicher Weise in radialer Richtung. Der Stützring 7 besteht, wie auch in Figur 1, bevorzugt aus PTFE. Die gesamte Dichtungsanordnung paßt sich sehr gut an die radialen Auslenkbewegungen der abzudichtenden Stange an. Die Dichtungsanordnung gelangt bevorzugt zur Abdichtung hoher Drücke zur Anwendung. Die Axialkraft, die das abzudichtende Medium auf die Dichtungsanordnung ausübt, wird im wesentlichen durch den Führungsring 7 aufgenommen, der in axialer Richtung in einer Ausnehmung des Gehäuses 1 angeordnet und an diesem abgestützt ist.

## Patentansprüche

1. Dichtungsanordnung zur Abdichtung einer hin- und herbewegbaren Stange gegenüber einem die Stange in radialem Abstand umschließenden Gehäuse (1), wobei die Dichtungsanordnung einen Dichtring (2) aus polymerem Werkstoff enthält, der mit einer radial beweglichen Dichtlippe (3) versehen und in einem Dichtungsgehäuse (4) aufgenommen ist, wobei eine Hilfsdichtlippe (5) vorgesehen ist, mit der das Gehäuse (1) durch die Kraft einer in axialer Richtung wirksamen Druckfeder (6) in Eingriff bringbar ist und wobei der Dichtring (2) durch einen Führungsring (7) auf der Stange abgestützt ist und die Hilfsdichtlippe (5) einen einstückigen Bestandteil des Dichtrings (2) bildet, dadurch gekennzeichnet, daß dem Dichtring (2) ein einstückig angeformter Anschlagpuffer (9) zur Begrenzung von radialen Auslenkbewegungen in Richtung des Dichtungsgehäuses (4) zugeordnet ist und daß der Anschlagpuffer (9) einen radialen Abstand vom Dichtungsgehäuse (4) aufweist, der 0,2 bis 0,8 mal so groß ist, wie ein radialer Spalt, den der Führungsring (7) mit einem Gehäusevorsprung (10) begrenzt.

2. Dichtungsanordnung nach Anspruch 1, dadurch gekennzeichnet, daß der Führungsring (7) aus PTFE besteht und in den Dichtring (2) einknöpfbar ist.

3. Dichtungsanordnung nach einem der Ansprüche 1 oder 2, dadurch gekennzeichnet, daß der Dichtring (2) und der Führungsring (7) adhäsiv verbunden sind.

4. Dichtungsanordnung nach einem der Ansprüche 1 bis 3, dadurch gekennzeichnet, daß die Dichtlippe (3) und die Hilfsdichtlippe (5) durch konvergierende Dichtflächen gebildet sind und daß die Dichtflächen auf der dem abzudichtenden Medium zugewandten Seite einen größeren Winkel mit der abzudichtenden Fläche umschließen, als auf der dem Medium abgewandten Seite.

5. Dichtungsanordnung nach Anspruch 4, dadurch gekennzeichnet, daß der Dichtlippe (3) eine Ringwendelfeder (8) zugeordnet ist.

6. Dichtungsanordnung nach einem der Ansprüche 1 bis 5, dadurch gekennzeichnet, daß der Dichtring (2) einen Versteifungsring (11) zumindest teilweise umschließt und daß die Druckfeder (6) den Versteifungsring (11) anliegend berührt.

7. Dichtungsanordnung nach Anspruch 6, dadurch gekennzeichnet, daß die Druckfeder (6) durch eine Tellerfeder gebildet ist.

8. Dichtungsanordnung nach einem der Ansprüche 6 oder 7, dadurch gekennzeichnet, daß die Druckfeder (6) eine axiale Vorspannkraft aufweist, die größer ist als die axiale Reibkraft auf den Dichtring (2) bei axialer Verschiebung der Stange.

## Claims

1. A sealing arrangement for sealing a rod, which rod is movable to and fro, against a housing (1) enclosing the rod at a radial distance, the sealing arrangement containing a sealing ring (2) made from polymer material, which is provided with a radially movable sealing lip (3) and is received in a sealing housing (4), an auxiliary sealing lip (5) being provided, with which the housing (1) can be brought into engagement by the force of a pressure spring (6) acting in the axial direction, and the sealing ring (2) being supported by a guide ring (7) on the rod and the auxiliary sealing lip (5) forming an integral component part of the sealing ring (2), characterized in that the sealing ring (2) is assigned a stop buffer (9), which is integrally moulded on, for limiting radial deflection motions in the direction of the sealing housing (4), and in that the stop buffer (9) has a radial distance from the sealing housing (4), which distance is 0.2 to 0.8 times as large as a radial gap which the guide ring (7) limits with a housing projection (10).

2. A sealing arrangement according to claim 1, characterized in that the guide ring (7) consists of PTFE and can be buttoned into the sealing ring (2).

3. A sealing arrangement according to one of claims 1 or 2, characterized in that the sealing ring (2) and the guide ring (7) are adhesively connected.

4. A sealing arrangement according to any one of claims 1 to 3, characterized in that the sealing lip (3) and the auxiliary sealing lip (5) are formed by convergent sealing surfaces and in that the sealing surfaces, on the side facing the medium to be sealed, form a greater angle with the surface to be sealed than on the side facing away from the medium.

5. A sealing arrangement according to claim 4, characterized in that the sealing lip (3) is assigned an annular helical spring (8).

6. A sealing arrangement according to any one of claims 1 to 5, characterized in that the sealing ring (2) encloses at least partially a stiffening ring (11) and in that the pressure spring (6) is in bearing contact with the stiffening ring (11).

7. A sealing arrangement according to claim 6, characterized in that the pressure spring (6) is formed by a cup spring.

8. A sealing arrangement according to one of claims 6 or 7, characterized in that the pressure spring (6) has an axial pretensioning force which is greater than the axial friction force upon the sealing ring (2) when the rod is axially displaced.

## Revendications

1. Dispositif d'étanchéité pour rendre étanche une tige pouvant être animée d'un mouvement de va-et-vient par rapport à un boîtier (1) entourant la tige à une distance radiale, le dispositif d'étanchéité comprenant un anneau d'étanchéité (2) en matière polymère, qui est pourvu d'une lèvre d'étanchéité (3) mobile radialement et est logé dans un boîtier d'étanchéité (4), une lèvre d'étanchéité auxiliaire (5) étant prévue, grâce à laquelle, sous l'action de la force d'un ressort à pression (6) agissant dans la direction axiale, un contact peut être établi avec le boîtier (1), et l'anneau d'étanchéité (2) étant appuyé sur la tige par l'intermédiaire d'une bague de guidage (7) et la lèvre d'étanchéité auxiliaire (5) formant une partie unitaire de l'anneau d'étanchéité (2), caractérisé en ce que l'anneau d'étanchéité (2) est pourvu d'un tampon de butée (9) solidaire avec lui pour limiter les mouvements de déviation radiaux en direction du boîtier d'étanchéité (4), et en ce que le tampon de butée (9) présente par rapport au boîtier d'étanchéité (4) une distance radiale dont la mesure est de 0,2 à 0,8 fois celle d'une fente radiale délimitée par la bague de guidage (7) et une saillie du boîtier (10).

2. Dispositif d'étanchéité selon la revendication 1, caractérisé en ce que la bague de guidage (7) est en PTFE et peut être emboîtée dans l'anneau d'étanchéité (2).

3. Dispositif d'étanchéité selon l'une des revendications 1 ou 2, caractérisé en ce que l'anneau d'étanchéité (2) et la bague de guidage (7) sont reliés de manière adhésive.

4. Dispositif d'étanchéité selon l'une des revendications 1 à 3, caractérisé en ce que la lèvre d'étanchéité (3) et la lèvre d'étanchéité auxiliaire (5) sont formées par des surfaces d'étanchéité convergentes et en ce que les surfaces d'étanchéité forment avec la surface à étanchéifier un angle qui est plus grand sur le côté tourné vers le milieu à rendre étanche que du côté éloigné du milieu.

5. Dispositif d'étanchéité selon la revendication 4, caractérisé en ce qu'un ressort spiral annulaire (8) est associé à la lèvre d'étanchéité (3).

6. Dispositif d'étanchéité selon l'une des revendications 1 à 5, caractérisé en ce que l'anneau d'étanchéité (2) entoure, au moins partiellement, une bague de renforcement (11) et en ce que le ressort à pression (6) est en contact étroit avec la bague de renforcement (11).

7. Dispositif d'étanchéité selon la revendication 6, caractérisé en ce le ressort à pression (6) est formé par un ressort Belleville.

8. Dispositif d'étanchéité selon l'une des revendications 6 ou 7, caractérisé en ce que le ressort à pression (6) présente une force de précontrainte axiale qui est supérieure à la force de frottement axiale s'exerçant sur l'anneau d'étanchéité (2) lors du déplacement axial de la tige.
